# EUROPÄISCHE PATENTSCHRIFT

(11) **EP 0 578 018 B1**
(45) Veröffentlichungstag und Bekanntmachung des Hinweises auf die Patenterteilung: **12.03.1997**
(21) Anmeldenummer: 93109623.4
(22) Anmeldetag: 16.06.1993
(51) Int. Cl.: B23H 7/06

(54) **Verfahren zum funkenerosiven Feinbearbeiten mittels drahtförmiger Elektroden und funkenerosive Schneidevorrichtung**
Method and apparatus for finishing cut surface of a workpiece produced by wire cut discharge process
Méthode et appareil pour la finition de surfaces de coupe d'une pièce d'usinage produite par le procédé d'électro-érosion à fil

(30) Priorität: 06.07.1992 DE 4222186
(43) Veröffentlichungstag der Anmeldung: 12.01.1994
(73) Patentinhaber: AG für industrielle Elektronik AGIE Losone bei Locarno, CH-6616 Losone/Locarno (CH)
(72) Erfinder: Bühler, Ernst, CH-6616 Losone (CH); Livio, Mazzolini, CH-6946 Ponte Capriasca (CH); Rino, d'Amario, CH-6807 Taverne (CH)
(74) Vertreter: von Samson-Himmelstjerna, Friedrich R., Dipl.-Phys.

(56) Entgegenhaltungen:
- CH-A- 639 886
- DE-A- 2 826 270
- DE-A- 3 929 111
- FR-A- 2 614 223
- GB-A- 2 068 816
- PATENT ABSTRACTS OF JAPAN vol. 10, no. 163 (M-487)(2219) 11. Juni 1986
- PATENT ABSTRACTS OF JAPAN vol. 5, no. 72 (M-68)(744) 14. Mai 1981
- PATENT ABSTRACTS OF JAPAN vol. 10, no. 81 (M-465)(2138) 29. Màrz 1986

## Beschreibung

Die Erfindung betrifft ein funkenerosives Feinbearbeitungsverfahren gemäß dem Oberbegriff des Patentanspruches 1 und eine funkenerosive Schneidevorrichtung gemäß dem Oberbegriff des Patentanspruches 21.

Ein Zweck der Erfindung besteht darin, das bekannte Verfahren dahingehend zu verbessern, daß trotz vieler Störeinflüsse wie thermisch bedingte Verformung der Maschinenstruktur, Vibrationen und mechanischen Spannungen im Werkstück die Oberflächenqualität des Werkstückes auch auf einer vergleichsweise einfachen Maschine drastisch verbessert werden kann.

Stand der Technik und Referenzen: Es ist bekannt, mit sogenannten Very High Precision-Maschinen (VHP) in klimatisierter Umgebung Werkstücke mit einer Rauheit von bis Ra=0,1µm funkenerosiv zu bearbeiten.

Es ist ebenfalls bekannt, funkenerosiv vorgeschnittene Werkstücke unter Verwendung eines starken Elektrolyten und der Drahtelektrode elektrochemisch nachzupolieren. Es werden dabei Gleichströme im 3 A-Bereich verwendet, und man kann damit gezielt die oberen Rauheitsspitzen abtragen.

Kritik Stand der Technik: Die bekannten VHP-Maschinen haben den Nachteil, daß sie etwa dreimal teuerer sind als normal genaue Maschinen. Die geforderten Temperatur-Gradienten von höchstens 1 K/24h sind mit einer Werkstattumgebung nicht vereinbar. Zudem ist in den meisten Fällen eine sehr hohe Oberflächenqualität des Werkstückes gefordert, nicht aber unbedingt eine sehr hohe Formgenauigkeit.

Das elektrochemische Verfahren ist äußerst schwierig in eine Funkenerosionsanlage zu integrieren, da Leitwerte des Dielektrikums um 10µS/cm üblich sind, und eine Trennung Elektrolyt-Dielektrikum fast unmöglich ist. Auch sind nach diesem Verfahren gewisse Materialien mit stark kristalliner Ausprägung, wegen der unterschiedlichen elektrochemischen Abtragsraten der einzelnen Gefügefasen, kaum polierbar.

Ergänzend sei noch der nachfolgende Stand der Technik genannt, der allerdings nicht die Realisierung hoher Oberflächenqualitäten auf normal genau arbeitenden Elektroerosionsmaschinen betrifft. Aus der DE-OS 39 29 111 A1 ist ein Verfahren zur Berechnung eines Versetzungsbetrages bei der Draht-Elektroerosion bekannt, mit dem eine Datenreduktion bei der Abspeicherung der Offsetwerte für Vor- und Nachschnitte erreicht werden soll. Die EP 0 312 056 A1 zeigt einen Drahtlagesensor zur Bestimmung der Drahtlage bei einem Drahtelektroerosionsverfahren. Der Artikel "feinste Positionierungen mit Piezoantrieben" aus der Zeitschrift "Feinwerktechnik & Messtechnik" 87 (1979) 4 S. 181 von K.Spanner und L.Dietrich beschreibt die Verwendung von Piezoantrieben für Feineinstellungen. Die angeführten Ausführungsformen betreffen jedoch "Instrumente fürs Labor" und nicht etwa Werkzeugmaschinen. Die DE-OS 39 07 656 A1 zeigt eine Präzisionswerkzeugmaschine, bei der die Lage des Werkstückes mit einem Wegaufnehmersystem erfaßt und über Krafteinleitungsstellen gesteuert wird. Die DE-PS 35 24 377 C2 zeigt eine Drahtführung für eine C-Gestellmaschine. Aus der DE-OS 38 13 306 ist eine Schneiddraht-Funkenerosionsvorrichtung bekannt, die eine Detektoreinrichtung aufweist, welche Konturfehler durch Messung der Abstände zwischen der Drahtelektrode, welche längs eines vorbestimmten Messweges bewegt wird, und der bearbeiteten Kante des Werkstücks ermittelt. Als absolute Referenz dient die Maschine bzw. deren Linearmess-System. Durch eine Gegenkopplung wird versucht, die gemessenen Fehler durch eine hochgenaue elektrische Entladung zu kompensieren. Die Detektoreinrichtung dient zur Erzielung einer hohen Kontur- und Formgenauigkeiten, nicht aber zur Realisierung hoher Oberflächenqualitäten auf normal genau arbeitenden Maschinen.

Aus Patent Abstracts of Japan, Band 5, Nr. 72 (M-68)(744), 14. Mai 1981 & JP-A-56 21 733, wonach der Oberbegriff des Anspruchs 1 gebildet wurde, ist ein Bearbeitungsverfahren zur Erzeugung von Oberflächen geringer Rauhheit bekannt, bei der die Werkstückoberfläche mehrmals nacheinander mit sukzessive abnehmender Stromstärke erodiert wird. Dabei folgt der Schnitt jeweils einer von der Maschine vorgegebenen Schnittbahn.

Aus Patent Abstracts of Japan, Band 10, Nr. 81 (M-465) (2138), 29. März 1986 & JP-A-60 221 221, wonach der Oberbegriff des Anspruchs 21 gebildet wurde, ist eine Drahtschneidevorrichtung bekannt, die zur Erzielung einer höheren Genauigkeit neben Stellgliedern mit Feinstellgliedern ausgerüstet ist.

Aus der CH-A-639 886 ist ein Verfahren zur funkenerosiven Materialbearbeitung bekannt, bei dem eine Elektrode beim Vorschub längs einer maschinenseitig vorgegebenen Schnittbahn Bewegungen quer zur Vorschubrichtung entsprechend Erhebungen auf der Werkstückoberfläche ausführen kann, wobei der die Materialabtragung bewirkende Strom invers zum momentanen Abstand der Elektrode von der vorgegebenen Schnittbahn variiert wird. Hierdurch werden die Erhebungen abgetragen und eine maschinenseitig vorgegebene Schnittfläche realisiert.

Es ist Aufgabe der Erfindung, ein Verfahren anzugeben, das hohe Oberflächenqualitäten, insbesondere bis unter 0.1µm Ra, auf einer normal genauen Drahterodiermaschine bei Werkstattumgebung ermöglicht. Eine weitere Aufgabe der Erfindung besteht darin, eine für das erfindungsgemäße Verfahren besonders geeignete funkenerosive Schneidevorrichtung zu schaffen.

Die Aufgabe wird im Hinblick auf das Verfahren durch die im Patentanspruch 1 angegebenen Merkmale gelöst. Im Hinblick auf die Vorrichtung wird die Aufgabe durch die Merkmale des Anspruches 21 gelöst.

Die Erfindung geht von der Idee aus, hohe Oberflächenqualitäten auf normal genauen Drahterodiermaschinen bei einer üblichen Werkstattumgebung zu realisieren. Dazu wird bei einem Verfahren zum funkenerosiven Feinbearbeiten mittels drahtförmiger Elektroden auf Maschinen limitierter Genauigkeit und Stabilität in vorteilhafter Weise die Kontur eines mindestens einmal vorgeschnittenen Werkstückes als geometrische Referenz für mindestens einen letzten Feinschnitt verwendet.

Besondere Vorteile der Erfindung bestehen darin, daß unnötige absolute Präzision der Maschine vermieden wird, und trotzdem Werkstücke z.B. für den Formenbau direkt, und ohne irgendwelche Nacharbeit ab Drahterodiermaschine (= funkenerosive Schneidevorrichtung) verwendet werden können. Das Verfahren verteuert die Maschine nur unwesentlich.

Mit der Erfindung kann in vorteilhafter Weise auf normal genau arbeitenden Maschinen in einer üblichen Werkstattumgebung die gesamte Oberfläche des Werkstückes mit so energieschwachen Impulsen bearbeitet werden, daß ein Spiegelglanz entsteht (Ra<0,1µm) (der Funkenspalt wird nämlich kleiner als die Maschinenfehler).

Bei einer besonders bevorzugten Variante der Erfindung wird die Spaltweite zwischen dem Werkstück und der Drahtelektrode durch Messen von mindestens einem elektrischen Spaltparameter ermittelt und bei konstanter Feinschnittgeschwindigkeit eine dem geometrieerzeugenden Vorschub überlagerte Feinservobewegung so quer zur Vorschubrichtung vorgenommen, daß dieser elektrische Spaltparameter, und damit die Spaltweite, konstant gehalten wird (Anspruch 2).

Bei einer weiteren besonders bevorzugten Weiterbildung der Erfindung ist oberhalb und unterhalb des Werkstückes je ein Lichtsensor in der Arbeitszone angeordnet, welche die Lichtstärke der Entladungsfunken messen, und über eine weitere Feinservobewegung wird die Drahtelektrode so quer zur Vorschubrichtung gekippt, daß die Lichtstärke oberhalb und unterhalb des Werkstückes gleich ist, so daß die Vertikallage der Drahtelektrode mit dem Werkstück übereinstimmt (Anspruch 3).

Bei einer weiteren bevorzugten Weiterbildung der Erfindung wird bei mehreren Feinschnitten auf den schwach gekrümmten und geraden Bahnabschnitten für diese Feinschnitte abwechslungsweise die Drahtelektrode um einen bestimmten Betrag jeweils vorwärts und dann rückwärts in Schnittrichtung gekippt (Anspruch 4).

Bei einer weiteren vorteilhaften Variante der Erfindung wird unmittelbar vor Ausführung des Feinschnittes die wirkliche Lage und Dimension des Werkstückes durch Antasten ermittelt und das Bearbeitungsprogramm anhand dieser Daten mit Hilfe der Koordinatenverschiebung und Koordinatendrehung und Offsetkorrektur so angepaßt, daß es mit dem vorgeschnittenen Werkstück übereinstimmt (Anspruch 5).

Bei einer weiteren bevorzugten Variante der Erfindung werden die Feinservobewegungen mit Hilfe der schon vorhandenen Maschinenachsen (X, Y, U, V) ausgeführt (Anspruch 6). Vorteilhaft werden die Feinservobewegungen ferner über die Offsetkorrektur bestimmt, wobei die Offsetkorektur anhand der Messung der elektrischen Spaltparameter und/oder der Lichtsensoren ständig so angepaßt wird, daß die Spaltweite immer konstant gehalten wird (Anspruch 7).

Besonders vorteilhafte Arbeitsergebnisse lassen sich ferner erzielen, wenn die Feinservobewegung mit Hilfe von zusätzlichen Feinstellgliedern XF, YF, UF, VF ausgeführt wird (Anspruch 8) und wenn die Feinstellglieder Piezoaktuatoren sind (Anspruch 9). Alternativ können die Feinstellglieder auch aus Kraftaktuatoren XK, YK, UK, VK bestehen, welche ein Federelement im linearen Bereich deformieren (Anspruch 10). Bevorzugt sind die Federelemente Strukturteile der Maschine oder eines Werkstück-Spannsystems (Anspruch 11) und werden pneumatisch oder hydraulisch mit geregeltem Druck beaufschlagt (Anspruch 12). Bei weiteren bevorzugten Varianten der Erfindung erzeugen die Kraftaktuatoren XK, YK, UK, VK elektromagnetisch (Anspruch 13) oder durch Erwärmung und/oder Kühlung und der daraus resultierenden Längenänderung eines temperaturempfindlichen Dehnungskörpers Kraft (Anspruch 14). Bevorzugt wirken die zusätzlichen Feinstellglieder ferner nur über das Werkstück-Spannsystem (Anspruch 15) und sie werden schon vor dem Vorschnitt für das Feinausrichten eines Rohwerkstückes verwendet (Anspruch 16).

Bei einer weiteren bevorzugten Variante der Erfindung sind anstelle der Lichtsensoren Ultraschallsensoren vorgesehen, deren Signale synchron zum Generatortakt ausgewertet werden, wobei über die Messung der Signallaufzeiten oder der Schallintensität die Entladungsverteilung zwischen Werkstückoberseite und Werkstückunterseite festgestellt wird (Anspruch 17).

Bei einer weiteren vorteilhaften Variante der Erfindung wird die Auslenkung der Feinservobewegung dem Bediener in numerischer und/oder grafischer Form angezeigt und beim Überschreiten einer Maximalauslenkung Alarm ausgelöst und die Bearbeitung mindestens während des Andauerns der Überschreitung gestoppt (Anspruch 18). Besonders vorteilhaft ist es ferner, wenn auf einer Visualisierungseinrichtung die Werkstückkontur aufgezeichnet wird und die ausgeführten Auslenkungen der Feinservobewegung in stark vergrößerter Form als Abweichung von der Werkstückkontur ebenfalls aufgezeichnet werden (Anspruch 19).

Das Feinservosystem kann in vorteilhafter Weise zum Ausführen von einer oder mehrerer der folgenden Aufgaben ausgelegt sein: Ausführen der Spindel- oder Maschinenkorrektur, Feinausrichten des Rohwerkstückes, Feinausrichten des Drahtes, Feinkompensation einer von einem Drahtlagesensor erfaßten Drahtauslenkung, Offsetkorrektur und Feinschnittkorrektur.

Nachfolgend wird die Erfindung anhand von Ausführungsbeispielen unter Bezug auf die Zeichnung näher beschrieben.
Es zeigen:
- Fig. 1: Ein Werkstück mit überzeichnetem Konturversatz, welcher durch mechanische Spannungen im Werkstückmaterial verursacht wurde.
- Fig. 2: Das gleiche Werkstück im Schnitt A-A mit überzeichnetem Vertikalversatz aus dem gleichen Grund.
- Fig. 3: Eine normal genaue Drahterodiermaschine mit angebauten Lichtsensoren.
- Fig. 4: Ein Werkstück mit Vertikalriefen, welche durch die in Schnittrichtung schräggestellte Drahtelektrode eliminiert werden.
- Fig. 5: Eine normal genaue Drahterodiermaschine mit auf die Drahtführung wirkenden zusätzlichen Feinstellgliedern.
- Fig. 6: Eine normal genaue Drahterodiermaschine mit auf die Maschinenstruktur wirkenden Kraftaktuatoren.
- Fig. 7: Eine normal genaue Drahterodiermaschine mit auf das Werkstück-Spannsystem wirkenden Feinstellgliedern.

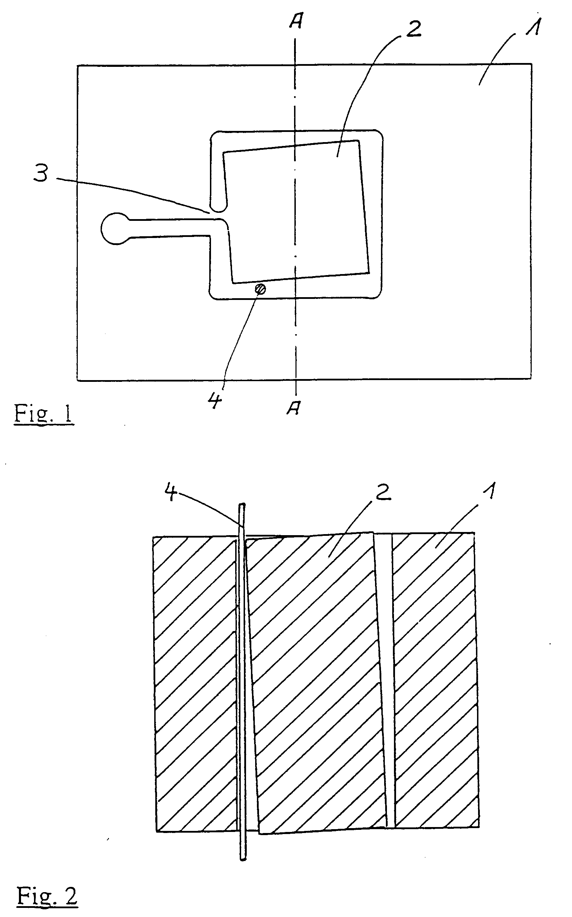

Fig. 1 zeigt ein Rohwerkstück 1 mit vorgeschnittenem Werkstück 2, welches über einen Steg 3 mechanisch und elektrisch mit dem Rohwerkstück 1 verbunden bleibt. Es ist übertrieben dargestellt, wie sich das Werkstück 2 verlagern kann, wenn man mit dem Vorschnitt, oder Vorschnitten, Kraftlinien von Werkstoff-Eigenspannungen durchschnitten hat.

Es ist ebenfalls möglich, daß sich nach den Vorschnitten die Maschinenstruktur durch thermische oder mechanische Einflüsse leicht deformiert, was dann mehr zu einem Parallelversatz zwischen Werkstück 2 und Drahtelektrode 4 führen würde. Es sei daran erinnert, daß sich Maschinenbaustahl typisch um 12µm pro K Temperaturänderung und m Länge dehnt. Diese lineare Wärmeausdehnung kann zwar durch geschickte mechanische Konstruktion zum Teil kompensiert werden, es bleiben aber immer erhebliche Restfehler vorhanden.

Fig. 2 stellt dasselbe Rohwerkstück 1 im Schnitt A-A dar. Das Werkstück 2 ist hier ebenfalls, übertrieben gekippt gezeichnet, durch freigewordene Werkstoff-Eigenspannungen aus seiner Vertikallage verdreht. Ein Feinschnitt ohne eine erfindungsgemäße Korrektur würde hier nur die Zonen am Werkstück 2 links oben und rechts unten bearbeiten. Je höher ein Werkstück ist, umso stärker kann sich eine solcher Fehler auswirken.

Für beide Fehlerarten nach Fig. 1 und Fig. 2 bieten selbst die hochgenauen VHP-Maschinen in einer klimatisierten Umgebung keine Lösung.

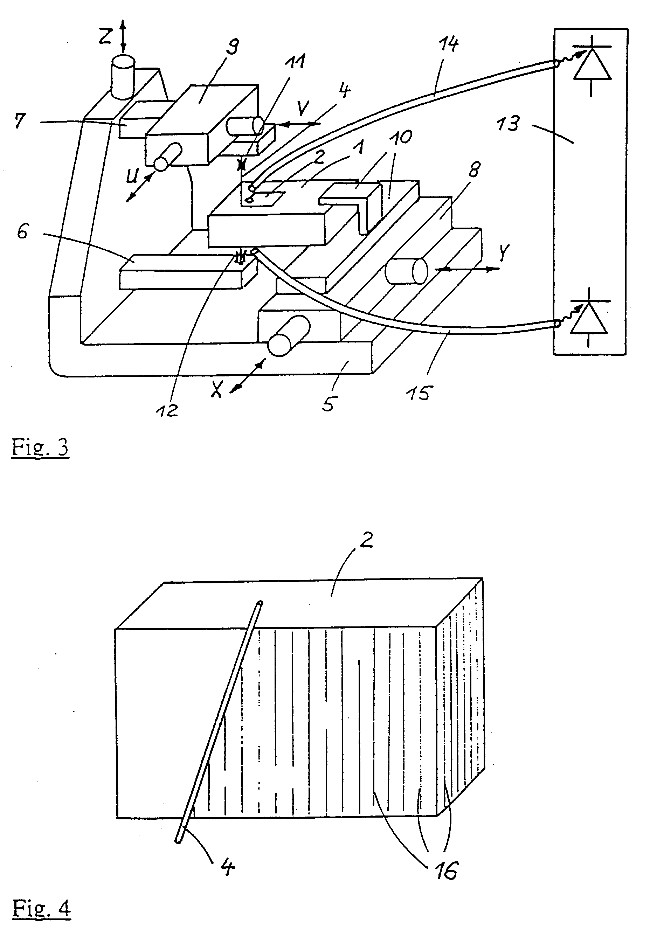

Fig. 3 zeigt eine übliche Bauweise einer normal genauen Drahterosionsmaschine. Unter normal genau versteht man eine absolute Positioniergenauigkeit der Achsen von etwa 5µm, ein Umkehrspiel von etwa 2µm und eine Wegauflösung in den Achsen von 1µm. Die Maschine besteht aus folgenden Strukturteilen: Grundstruktur 5, unterer Arm 6, oberer Arm 7, X-Y-Kreuztisch 8, U-V-Kreuztisch 9 und Werkstück-Spannsystem 10. Der obere Arm 7 kann über die Z-Achse der Werkstückhöhe angepaßt werden. Über die U- und die V-Achse kann eine obere Drahtführung 11 gegenüber einer unteren Drahtführung 12 verlagert werden, wodurch man die Drahtelektrode 4 räumlich schräg stellen kann, um konische Schnittkonturen zu erzeugen.

Der erste Vorschnitt im Rohwerkstück 1 - um das Werkstück 2 zu erzeugen - erfolgt mit Stromimpulsamplituden von mehreren hundert Ampère bei einer Impulsdauer von etwa 2µs.

Die dabei erzeugte laterale Spaltweite zwischen der Drahtelektrode 4 und dem Werkstück 2 beträgt typisch 60µm. Die erzeugte Oberflächenqualität entspricht etwa 2µm Ra, was für die meisten Anwendungen ungenügend ist. Darum hat man schon früh die Nachschnitt-Technologie entwickelt, um bessere Oberflächen und auch kleinere Formfehler zu erreichen. Dazu wird die Werkstückkontur mit angepaßter Offsetkorrektur mehrmals nacherodiert, und zwar bei immer geringeren Stromamplituden und kürzeren Impulszeiten. Dies hat neben einer feineren Oberfläche auch eine drastische Reduktion der lateralen Spaltweite zur Folge. Bei einer Impulsamplitude von etwa 2 Ampère und einer Impulsdauer von etwa 0.3µs erzeugt man eine Rauheit von etwa 0.2µm Ra bei einer Spaltweite von etwa 3µm. Dies ist eine Grenze, wo sich die verschiedenen mechanischen Fehler einer normal genauen Maschine bereits stark auswirken. Dazu kommen thermisch bedingte Fehler und die beschriebenen Fehler nach Fig. 1 und 2.

Will man diese Grenze unterschreiten, ergeben sich nicht reproduzierbare Resultate, weil partienweise auf dem Werkstück 2 wegen Kurzschluß oder Leerlauf gar keine Erosion mehr stattfindet.

Es ist völlig sinnlos, für diesen Zweck immer genauere Maschinen in einer noch besser klimatisierten Umgebung einsetzen zu wollen, auch weil die Fehler nach Fig. 1 und 2 bestehen bleiben, und die Anlagenkosten ins Unermeßliche steigen. Die Erfindung bietet einfache Lösungen an, um diese Grenze entscheidend zu durchbrechen.

Der Hauptgedanke ist dabei, nicht mehr die Maschine als absolute Referenz für die Geometrie der Nachschnitte zu nehmen, sondern das durch ein- oder mehrfachen Vorschnitt erzeugte Werkstück 2 selber. Die Anzahl der Vorschnitte richtet sich dabei nach dem geforderten maximal zulässigen Formfehler.

Eine erste Maßnahme besteht nun darin, die Auflösung der Maschinenachsen zu erhöhen, um auch Bewegungen im Submikrometerbereich zu ermöglichen. Die absolute Genauigkeit der Maschine muß dabei nicht erhöht werden. Für Antriebe mit Schrittmotoren bietet sich dafür die rein elektronische Lösung der Mikroschritte an. Für andere Antriebe wird man die Auflösung des Wegmeß-Systems erhöhen. Von der numerischen Steuerung muß nun noch die Schnittrichtung, d.h. die Achsen-Teilverhältnisse resp. Sinus-Cosinusfunktionen bekannt sein, woraus die Normale auf die Schnittrichtung durch eine 90° Winkeldrehung ermittelt werden kann. In dieser Querrichtung werden nun erfindungsgemäß Feinservobewegungen ausgeführt, mit dem Ziel, die laterale Spaltweite immer auf einen optimalen Wert zu regulieren. Dazu werden wie bei der bekannten Nachschnitt-Technologie, eine angepaßte Offsetkorrektur, geeignete Generatorparameter und eine konstante Schnittgeschwindigkeit vorgewählt. Neu wird nun mindestens ein elektrischer Spaltparameter, z.B. mittlere Arbeitsspannung, mittlerer Arbeitsstrom oder mittlere Zündverzögerung, gemessen und mit einem vorgewählten Wert verglichen. Bei einer vorhandenen Abweichung wird durch die Zustellung oder Entfernung vom Werkstück 2 diese Feinservobewegung so ausgeführt, daß die Abweichung gegen Null strebt. Dank dieser Maßnahme verfolgt die Drahtelektrode 4 eine fehlerhafte Lage des Werkstückes 2, wie in Fig. 1 dargestellt.

Es werden aber zusätzlich auch eine eventuell falsch gewählte Offsetkorrektur und thermische oder mechanische Maschinenfehler korrigiert. Als Resultat wird eine gleichmäßige Schicht Werkstoff über den ganzen Umfang des Werkstückes 2 abgetragen. Ein Vertikalversatz des Werkstückes 2 nach Fig. 2 kann mit diesen Maßnahmen allerdings noch nicht berücksichtigt werden. Dazu braucht es einen zusätzlichen Sensor, welcher die Funkenverteilung über die Werkstückhöhe erfassen kann. Eine Lösung ist in Fig. 3 dargestellt. Über einen oberen Lichtsensor 14 und einen unteren Lichtsensor 15, welche Lichtleiter sein können, wird die Lichtintensität in der Arbeitszone oberhalb und unterhalb des Werkstückes erfaßt, und über eine optische Meßeinrichtung 13 wird eine eventuelle Differenz festgestellt. Das Ausgangssignal der optischen Meßeinrichtung 13 dient nun einer weiteren Feinservobewegung über die Achsen U-V mit dem Ziel, die Funkenintensität oben und unten am Werkstück 2 gleich zu halten. Die Richtung der Kippbewegung der Drahtelektrode 4 wird auch hier durch die numerische Steuerung quer zur Schnittrichtung bestimmt.

Für die Erfassung der Funkenverteilung über die Werkstückhöhe gibt es weitere Möglichkeiten. Es können z.B. anstelle der Lichtsenosren 14, 15 Ultraschallsensoren angebracht werden, welche die Schallintensität der Entladungen erfassen. Da die Schallwellen über die Werkstückhöhe eine starke Dämpfung erfahren, ergibt sich aus der Amplitude eine Distanzinformation. Die Distanz kann aber auch aus der Laufzeit der Schallwellen ermittelt werden. Für dieses Verfahren ist es notwendig, die Zeit zwischen dem Generatorimpuls und dem Sensorsignal zu messen.

Andere Verfahren für die Ermittlung dieser Funkenverteilung nützen die Impedanz der Drahtelektrode 2 aus und führen über Strom- oder Spannungs-Differentialmessungen zu ähnlichen Meßergebnissen. Diese Verfahren werden aber mit abnehmender Stromamplitude immer störanfälliger, und sind für diese Anwendung schlechter geeignet. Als Effekt dieser weiteren Feinservobewegungen folgt die Drahtelektrode 4 nun auch dem Vertikalfehler des Werkstückes 2 nach Fig. 2.

Fig. 4 zeigt ein Werkstück 2, welches trotz mehrmaligem Feinschnitt optisch nur schwach sichtbare Vertikalstrukturen 16 aufweist. Diese Strukturen 16 sind größtenteils kleine Erhebungen im Submikrometerbereich im Abstand von beispielsweise 0,5mm. Die Gründe für diese Vertikalstrukturen 16 können mehrere sein, wie kleine punktförmige Materialdefekte im Gefüge des Werkstückes 2, Durchmesserfehler der Drahtelektrode 4 oder Vibrationsstöße auf die Maschinenstruktur. Das Problem ist, daß diese Strukturen 16 während den Feinschnitten jeweils nur ganz kurz im Eingriff sind und darum kaum ausgeglättet werden. Erfindungsgemäß wird auf den geraden und nur leicht gekrümmten Bahnabschnitten die Drahtelektrode 4 abwechslungsweise jeden Feinschnitt leicht in Schnittrichtung vorwärts respektive rückwärts geneigt. Die Kippbewegung wird von der numerischen Steuerung und den U-V-Achsen bewerkstelligt. Dies ergibt eine Art Kreuzschliff für Funkenerosion und hat zur Folge, daß beim Feinschnitt diese Vertikalstrukturen viel länger im Eingriff mit der Drahtelektrode 4 bleiben, und daß damit diese Erhebungen bevorzugt abgetragen werde. Als ideale Größe dieser Neigung gilt ein Versatz zwischen unterer und oberer Drahtführung 11, 12 in der Größenordnung des Riefenabstandes von ungefähr 0,5mm, aber schon 0,1mm ergibt bereits gute Verbesserungen.

Für nicht so hohe Anforderungen an die Endrauheit und besonders bei Verwendung einer Maschine mit hoher absoluter Genauigkeit in klimatisierter Umgebung, kann es absolut ausreichend sein, unmittelbar vor einem Feinschnitt die wirkliche Lage und Dimension des Werkstückes 2 durch Antasten zu ermitteln. Es sind mittlerweile Drahtlagesensoren zur Verfügung, wie sie im Patent DE 28 26 270 (bzw. US 4,232,208) offenbart sind. Diese Sensoren dienen zur Messung und Korrektur der Lage der Drahtelektrode 4 gegen die Drahtführungen 11, 12.

Solche Sensoren ermöglichen auch ein hochgenaues, stromloses Antasten im Submikrometerbereich.

Über ein residentes Meßprogramm ist es möglich, für beliebige Werkstückkonturen Parallelverschiebungen des Werkstückes 2 in der X- und Y-Achse, die Verdrehwinkel um die Z-Achse, um die X-Achse und um die Y-Achse (Eulersche Drehmatrix) zu erfassen. Ebenfalls is es möglich, in gleicher Weise die aktuelle Dimension des Werkstückes 2 zu messen und daraus die richtige Offsetkorrektur herzuleiten. Damit können sowohl Durchmesserfehler der Drahtelektrode 4 wie auch Wärmedehnung des Werkstückes 2 selber kompensiert werden. Das in der numerischen Steuerung gespeicherte Bearbeitungsprogramm wird nun so in den Koordinaten gedreht und verschoben, daß es mit der erfaßten Lage des Werkstückes 2 übereinstimmt. Die dazu notwendigen mathematischen Matrixoperationen sind bekannt. Siehe dazu den Artikel "Software Geometriekorrektur" von W. Knapp in der Technischen Rundschau Nr. 39/1987 Hallwag Bern, Schweiz und die dort genannten Literaturstellen.

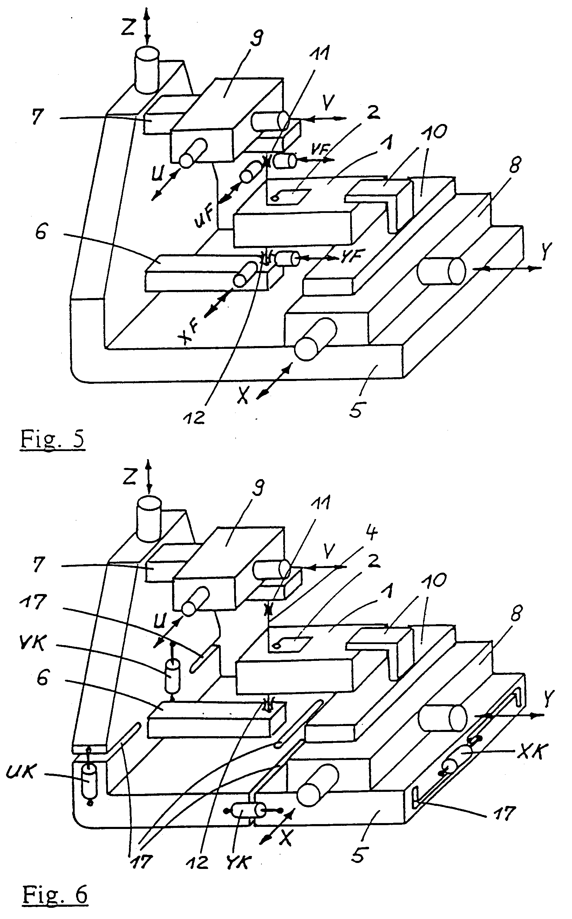

Fig. 5 zeigt eine weitere Ausgestaltung der Erfindung, indem die zusätzlichen Feinstellglieder XF, YF auf die untere Drahtführung 12, und die zusätzlichen Feinstellglieder UF, VF auf die obere Drahtführung 11 wirken. Diese Feinstellglieder XF, YF, UF, VF können Piezoaktuatoren sein, wie sie z.B. aus dem Patent DE 30 48 631 (bzw. US 4,423,347) bekannt sind. Es können damit sehr feine und schnelle Bewegungen, selbst im Submikrometerbereich ausgeführt werden. Diese Anordnung ist besonders vorteilhaft, wo auch die nur schlecht mechanisch dämpfbaren niederfrequenten Maschinenschwingungen kompensiert werden sollen. Die Feinstellglieder XF, YF, UF, VF könnten natürlich auch mit entsprechenden elektromechanischen Konstruktionen realisiert werden.

Eine weitere Möglichkeit zur Ausführung der Feinservobewegung zeigt Fig. 6. Die Idee ist, mit Kraftaktuatoren XK, YK, UK, VK auf die elastischen Strukturteile der Maschine einzuwirken. Die Elastizität dieser Strukturteile kann dazu über gezielt eingebrachte Schwächungen 17 beeinflußt werden. Diese Kraftaktuatoren XK, YK, UK, VK könnten z.B. auch am oberen Arm 7 und/oder unteren Arm 6 angebracht werden.

Für die Krafterzeugung kommen druckgeregelte pneumatische oder hydraulische Kurzhubzylinder in Betracht, aber auch elektromechanische Bauelemente sind verwendbar. Wenn nur langsame, aber hochgenaue Bewegungen verlangt sind, kann man temperaturempfindliche Dehnungskörper einsetzen, z.B. aus Messing oder einer Speziallegierung (z.B. Memory-Legierungen), welche durch eine gesteuerte Temperatureinwirkung gedehnt oder geschrumpft werden.

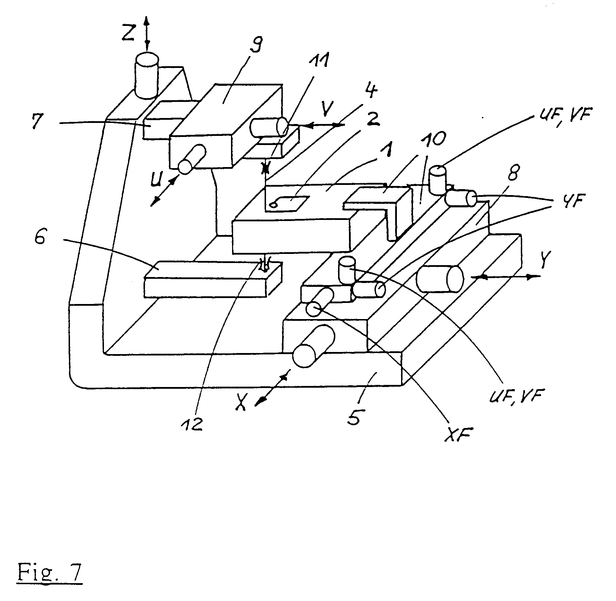

Fig. 7 zeigt eine Ausführungsform der Erfindung, welche besonders zur Nachrüstung auf normal genaue Maschinen geeignet ist. Die Feinstellglieder XF, YF, UF, VF sind hier in das Werkstück-Spannsystem 10 integriert. Natürlich kann auch hier das Prinzip der Kraftaktuatoren XK, YK, UK, VK angewendet werden.

Bei dieser Ausführungsform stimmen zwar die Drehpunkte der Kippachsen-Feinstellglieder UF, VF nicht immer mit der Achse der Drahtelektrode 4 überein, dies ist jedoch bei kleineren Werkstücken 2 und geringen Feinservobewegungen nicht störend. Dieser Effekt wird durch den Vorteil der einfachen Nachrüstbarkeit mehr als wettgemacht.

Als weiteren Vorteil erhält man eine Möglichkeit zum automatischen Feinausrichten des Rohwerkstückes 1 beim Einrichten der Maschine. Dazu wird der Aufspannfehler des Rohwerkstückes durch Antasten ermittelt und sofort über die Feinstellglieder XF, YF, UF, VF oder die Kraftaktuatoren XK, YK, UK, VK kompensiert. Damit liegen die Hauptachsen des Rohwerkstückes 1 in gleicher Richtung wie die Maschinenachsen X, Y, U, V, Z, was den Vorteil hat, daß in diesen Richtungen keine Linearinterpolationsfehler der numerischen Steuerung auftreten.

Es ist noch wichtig, dem Bediener einen Anhaltspunkt zu geben, welche Feinservobewegungen ausgeführt werden. Erfindungsgemäß ist darum vorgesehen, die Auslenkbeträge der Feinstellglieder XF, YF, UF, VF in numerischer oder grafischer Form anzuzeigen.

Ebenso ist es wichtig, die Bearbeitung zu unterbrechen, wenn der Auslenkbetrag den Stellbereich eines Feinstellgliedes überschreitet. Dies kann z.B. vorkommen, wenn die Maschine einen zu großen Thermoschock erlitten hat. Nach Abklingen dieser thermisch bedingten Verformung der Maschine kann die Arbeit automatisch fortgesetzt werden.

Als weitere nützliche Information für die Bediener ist vorgesehen, z.B. auf einem Bildschirm die Werkstückkontur grafisch aufzuzeichnen und über die ganze Kontur die Feinstellbewegungen des Feinschnittes in stark vergrößerter Form, als Abweichung von der Sollkontur, ebenfalls aufzuzeichnen. Es kann dazu beispielsweise eine andere Farbe oder eine punktierte Strichart verwendet werden. Der Bediener kann aus dieser Information lernen, ob er eine falsche Offsetkorrektur eingestellt hat, oder diagnostizieren, wie sich die Maschine vor einem Stopp wegen zu großem Auslenkbetrag eines Feinstellgliedes verhalten hat. Dies ist eine Art Mikroskop auf dem Bildschirm.

Je nach Auslegung der Feinstellglieder XF, YF, UF, VF können diese für weitere Aufgaben, zum Teil sogar gleichzeitig, eingesetzt werden. Das vorerwähnte Feinausrichten des Rohwerkstückes 1 ist eine Möglichkeit, aber auch die Spindel- oder Maschinenkorrektur, welche gewöhnlich nur in Schritten von 1µm ausgeführt wird, kann so viel feiner realisiert werden. Auch die erwähnte Drahtlagekorrektur mit Hilfe eines Drahtlagesensors kann so ausgeführt werden, und selbst die Offsetkorrektur ist bei einem größeren Stellbereich machbar. Letzteres hätte zur Folge, daß die Offsetkorrektur von der Bahninterpolation entkoppelt werden kann, was eine über die Kontur variable Offsetkorrektur ermöglicht. Vorteile ergäben sich für gezielte Eingriffe bei starken Bahnkrümmungen zur Verbesserung der dort meistens vorhandenen großen Formfehler.

## Patentansprüche

1. Verfahren zum funkenerosiven Feinbearbeiten mittels drahtförmiger Elektroden auf Maschinen limitierter Genauigkeit und Stabilität, wobei bei einem durch einoder mehrfachen Vorschnitt vorbearbeitetem Werkstück (2) mindestens ein Feinschnitt durchgeführt wird,
dadurch gekennzeichnet, daß
bei dem Feinschnitt mit Hilfe wenigstens einer Sensorvorrichtung und durch Feinservobewegungen eine optimale laterale Spaltweite eingehalten wird, wobei das Werkstück (2) als absolute Referenz für die Geometrie des Feinschnitts dient.

2. Verfahren nach Anspruch 1, dadurch gekennzeichnet, daß die Spaltweite zwischen dem Werkstück (2) und der Drahtelektrode (4) durch Messen von mindestens einem elektrischen Spaltparameter ermittelt wird, und daß bei konstanter Feinschnittgeschwindigkeit eine dem geometrieerzeugenden Vorschub überlagerte Feinservobewegung so quer zur Vorschubrichtung vorgenommen wird, daß dieser elektrische Spaltparameter, und damit die Spaltweite, konstant gehalten wird.

3. Verfahren nach Anspruch 1 bis 2, dadurch gekennzeichnet, daß oberhalb und unterhalb des Werkstückes (2) je ein Lichtsensor (14, 15) in der Arbeitszone angeordnet ist, und daß diese Lichtsensoren (14, 15) die Lichtstärke der Entladungsfunken messen, und daß über eine weitere Feinservobewegung die Drahtelektrode (4) so quer zur Vorschubrichtung gekippt wird, daß diese Lichtstärke oberhalb und unterhalb des Werkstückes (2) gleich ist, und damit die Vertikallage der Drahtelektrode (4) mit dem Werkstück (2) übereinstimmt.

4. Verfahren nach den Ansprüchen 1 bis 3, dadurch gekennzeichnet, daß bei mehreren Feinschnitten auf den schwach gekrümmten und geraden Bahnabschnitten für diese Feinschnitte abwechslungsweise die Drahtelektrode (4) um einen bestimmten Betrag jeweils vorwärts und dann rückwärts in Schnittrichtung gekippt wird.

5. Verfahren nach Anspruch 1, dadurch gekennzeichnet, daß unmittelbar vor Ausführung des Feinschnittes die wirkliche Lage und Dimension des Werkstückes 2 durch Antasten ermittelt wird, und daß das Bearbeitungsprogramm anhand dieser Daten mit Hilfe der Koordinatenverschiebung und Koordinatendrehung und Offsetkorrektur so angepaßt wird, daß es mit dem vorgeschnittenen Werkstück (2) übereinstimmt.

6. Verfahren nach den Ansprüchen 1 bis 5, dadurch gekennzeichnet, daß die Feinservobewegungen mit Hilfe der schon vorhandenen Maschinenachsen (X, Y, U, V) ausgeführt werden.

7. Verfahren nach den Ansprüchen 1 bis 6, dadurch gekennzeichnet, daß die Feinservobewegungen über die schon vorhandene Offsetkorrektur bestimmt werden, wobei die Offsetkorrektur anhand der Messung der elektrischen Spaltparameter und/oder der Lichtsensoren (14, 15) ständig so angepaßt wird, daß die Spaltweite immer konstant gehalten wird.

8. Verfahren nach den Ansprüchen 1 bis 5, dadurch gekennzeichnet, daß die Feinservobewegung mit Hilfe von zusätzlichen Feinstellgliedern (XF, YF, UF, VF) ausgeführt wird.

9. Verfahren nach Anspruch 8, dadurch gekennzeichnet, daß diese Feinstellglieder (XF, YF, UF, VF) Piezoaktuatoren sind.

10. Verfahren nach Anspruch 8, dadurch gekennzeichnet, daß diese Feinstellglieder aus Kraftaktuatoren (XK, YK, UK, VK) bestehen, welche ein Federelement im linearen Bereich deformieren.

11. Verfahren nach Anspruch 10, dadurch gekennzeichnet, daß diese Federelemente Strukturteile (5, 6, 7) der Maschine oder eines Werkstück-Spannsystems (10) sind.

12. Verfahren nach Anspruch 10, dadurch gekennzeichnet, daß diese Kraftaktuatoren (XK, YK, UK, VK) pneumatisch oder hydraulisch mit geregeltem Druck beaufschlagt werden.

13. Verfahren nach Anspruch 10, dadurch gekennzeichnet, daß diese Kraftaktuatoren (XK, YK, UK, VK) elektromagnetisch Kraft erzeugen.

14. Verfahren nach Anspruch 10, dadurch gekennzeichnet, daß diese Kraftaktuatoren (XK, YK, UK, VK) durch Erwärmung und/oder Kühlung und der daraus resultierenden Längenänderung eines temperaturempfindlichen Dehnungskörpers Kraft erzeugen.

15. Verfahren nach Anspruch 8, dadurch gekennzeichnet, daß diese zusätzlichen Feinstellglieder (XF, YF, UF, VF) nur über das Werkstück-Spannsystem (10) wirken.

16. Verfahren nach den Ansprüchen 8 bis 15, dadurch gekennzeichnet, daß diese Feinstellglieder (XF, YF, UF, VF) schon vor dem Vorschnitt für das Feinausrichten eines Rohwerkstückes (1) verwendet werden.

17. Verfahren nach Anspruch 3, dadurch gekennzeichnet, daß anstelle der Lichtsensoren (14, 15) Ultraschallsensoren vorhanden sind, deren Signale synchron zum Generatortakt ausgewertet werden, wobei über die Messung der Signallaufzeiten oder der Schallintensität die Entladungsverteilung zwischen Werkstückoberseite und Werkstückunterseite festgestellt wird.

18. Verfahren nach den Ansprüchen 1 bis 17, dadurch gekennzeichnet, daß die Auslenkung der Feinservobewegung dem Bediener in numerischer und/oder grafischer Form angezeigt wird, und daß beim Überschreiten einer Maximalauslenkung Alarm ausgelöst wird und die Bearbeitung mindestens während des Andauerns der Überschreitung gestoppt wird.

19. Verfahren nach Anspruch 18, dadurch gekennzeichnet, daß auf einer Visualisierungseinrichtung die Werkstückkontur aufgezeichnet wird, und daß die ausgeführten Auslenkungen der Feinservobewegung in stark vergrößerter Form als Abweichung von der Werkstückkontur ebenfalls aufgezeichnet werden.

20. Verfahren nach den Ansprüchen 1 bis 19, dadurch gekennzeichnet, daß das Feinservosystem gleichzeitig eine oder mehrere der folgenden Aufgaben erfüllen kann: Ausführen der Spindel- oder Maschinenkorrektur, Feinausrichten des Rohwerkstückes (1), Feinausrichten des Drahtes (4), Feinkompensation einer von einem Drahtlagesensor erfaßten Drahtauslenkung, die Offsetkorrektur und die Feinschnittkorrektur.

21. Funkenerosive Drahtschneidevorrichtung zum Schneiden eines Werkstücks (2), mit einer draht- oder bandförmigen Elektrode (4), die Stellglieder (X, Y, U, V) und zusätzlich Feinstellglieder (XF, YF, UF, VF) aufweist dadurch gekennzeichnet, daß
die Feinstellglieder (XF, YF, UF, VF) zum Durchführen einer zum geometrieerzeugenden Vorschub quer gerichteten Feinservobewegung ausgelegt sind,
daß wenigstens eine Sensorvorrichtung zur Messung des Abstands zwischen Werkstück (2) und Elektrode (4) vorgesehen ist, die mit den Feinstellgliedern (XF, YF, UF, VF) so zusammenwirkt, daß der Abstand mit Hilfe der Feinstellglieder (XF, YF, UF, VF) in einem optimalen Bereich haltbar ist, und
daß die Drahtschneidevorrichtung so ausgelegt ist, daß das Werkstück (2) als absolute Referenz für die Geometrie des Feinschnitts dient.

22. Vorrichtung nach Anspruch 21, dadurch gekennzeichnet, daß oberhalb und unterhalb des Werkstückes (2) je ein Lichtsensor (14, 15) zum Messen der Lichtstärke der Entladungsfunken in der Arbeitszone angeordnet ist.

23. Vorrichtung nach Anspruch 21 oder 22, dadurch gekennzeichnet, daß die Feinstellglieder (XF, YF, UF, VF) Piezoaktuatoren sind.

24. Vorrichtung nach Anspruch 21, 22 oder 23, dadurch gekennzeichnet, daß die Feinstellglieder aus Kraftaktuatoren (XK, YK, UK, VK) bestehen, welche wenigstens ein Federelement im linearen Bereich deformieren.

25. Vorrichtung nach Anspruch 24, dadurch gekennzeichnet, daß diese(s) Federelement(e) Strukturteile (5, 6, 7) der Vorrichtung oder eines Werkstück-Spannsystems (10) der Vorrichtung sind.

26. Vorrichtung nach Anspruch 24 oder 25, dadurch gekennzeichnet, daß die Kraftaktuatoren (XK, YK, UK, VK) pneumatisch oder hydraulisch mit geregeltem Druck beaufschlagbar sind.

27. Vorrichtung nach Anspruch 24 oder 25, dadurch gekennzeichnet, daß die Kraftaktuatoren (XK, YK, UK, VK) elektromagnetisch Kraft erzeugen.

28. Vorrichtung nach Anspruch 24, dadurch gekennzeichnet, daß die Kraftaktuatoren (XK, YK, UK, VK) durch Erwärmung und/oder Kühlung und der daraus resultierenden Längenänderung eines temperaturempfindlichen Dehnungskörpers Kraft erzeugen.

29. Vorrichtung nach einem der Ansprüche 24 bis 28, dadurch gekennzeichnet, daß die zusätzlichen Feinstellglieder (XF, YF, UF, VF) nur über das Werkstück-Spannsystem (10) wirken.

30. Vorrichtung nach einem der Ansprüche 22 bis 29, dadurch gekennzeichnet, anstelle der Lichtsensoren (14, 15) Ultraschallsensoren vorhanden sind.

31. Vorrichtung nach einem der Ansprüche 21 bis 30, gekennzeichnet durch eine Visualisierungseinrichtung, auf der die Werkstückkontur aufzeichenbar ist, wobei die ausgeführten Auslenkungen der Feinservobewegung in stark vergrößerter Form als Abweichung von der Werkstückkontur ebenfalls aufzeichenbar sind.

## Claims

1. A process for electrical discharge fine machining by means of wire-shaped electrodes on machines of limited precision and stability, with at least one fine cut being performed in the case of a workpiece (2) which has been premachined by a single or multiple preliminary cut,
**characterised in that** during the fine cut an optimal lateral gap width is observed by means of at least one sensor device and by fine servo movements, with the workpiece (2) serving as an absolute reference for the geometry of the fine cut.

2. A process according to Claim 1,
**characterised in that** the gap width between the workpiece (2) and the wire electrode (4) is determined by measuring at least one electrical gap parameter,
**and in that** at constant fine cut speed a fine servo movement coinciding with the geometry-producing feed is performed at right angles to the feed direction so that this electric gap parameter, and consequently the gap width, is kept constant.

3. A process according to Claim 1 to 2,
**characterised in that** a light sensor (14, 15) is disposed in the working zone both above and below the workpiece (2),
**and in that** these light sensors (14, 15) measure the luminous intensity of the discharge sparks,
**and in that** the wire electrode (4) is tilted via a further fine servo movement at right angles to the feed direction so that this luminous intensity is equal above and below the workpiece (2), and consequently the vertical position of the wire electrode (4) coincides with the workpiece (2).

4. A process according to Claims 1 to 3,
**characterised in that** with several fine cuts on the gently curved and straight path sections for these fine cuts the wire electrode (4) is alternately tilted forwards and then backwards in the cutting direction by a determined amount.

5. A process according to Claim 1,
**characterised in that** directly before the performance of the fine cut the actual position and dimension of the workpiece 2 is determined by scanning,
**and in that** the machining program is adapted by means of this data with the aid of coordinate displacement and coordinate rotation and offset correction so that it coincides with the precut workpiece (2).

6. A process according to Claims 1 to 5,
**characterised in that** the fine servo movements are performed with the assistance of already provided machine axes (X, Y, U, V).

7. A process according to Claims 1 to 6,
**characterised in that** the fine servo movements are determined via the already provided offset correction, with the offset correction being adapted by means of the measurement of the electric gap parameters and/or the light sensors (14, 15) so that the gap width is always kept constant.

8. A process according to one of Claims 1 to 5,
**characterised in that** the fine servo movement is performed with the aid of additional fine control elements (XF, YF, UF, VF).

9. A process according to Claim 8,
**characterised in that** these fine control elements (XF, YF, UF, VF) are piezo actuators.

10. A process according to Claim 8,
**characterised in that** these fine control elements consist of power actuators (XK, YK, UK, VK), which deform a spring element in the linear range.

11. A process according to Claim 10,
**characterised in that** these spring elements are structural parts (5, 6, 7) of the machine or of a workpiece clamping system (10).

12. A process according to Claim 10,
**characterised in that** these force actuators (XK, YK, UK, VK) are charged pneumatically or hydraulically with regulated pressure.

13. A process according to Claim 10,
**characterised in that** these force actuators (XK, YK, UK, VK) produce force electromagnetically.

14. A process according to Claim 10,
**characterised in that** these force actuators (XK, YK, UK, VK) produce force by heating and/or cooling and the resultant change in length of a temperature-sensitive expansion member.

15. A process according to Claim 8,
**characterised in that** these additional fine control elements (XF, YF, UF, VF) only act via the workpiece clamping system (10).

16. A process according to Claims 8 to 15,
**characterised in that** these fine control elements (XF, YF, UF, VF) are used before the preliminary cut for the fine alignment of a crude workpiece (1).

17. A process according to Claim 3,
**characterised in that** instead of the light sensors (14, 15) ultrasound sensors are provided, the signals of which are evaluated in step with the generator sequence, with the discharge distribution between the upper side and under side of the workpiece being determined via the measurement of the group delay or the sound intensity.

18. A process according to Claims 1 to 17,
**characterised in that** the deflection of the fine servo movement is indicated to the operator in numerical and/or graphical form,
**and in that** when a maximum deflection is exceeded the alarm is triggered and machining is stopped at least during the duration of the exceeded deflection.

19. A process according to Claim 18,
**characterised in that** the workpiece contour is recorded on a visualising device,
**and in that** the performed deflections of the fine servo movement are also recorded in greatly enlarged form as a deviation from the workpiece contour.

20. A process according to Claims 1 to 19,
**characterised in that** the fine servo system may simultaneously fulfil one or more of the following tasks: perform the spindle or machine correction, fine alignment of the crude workpiece (1), fine alignment of the wire (4), fine compensation of a wire deflection detected by a wire position sensor, offset correction and fine cut correction.

21. An electrical discharge wire cutting device for cutting a workpiece (2), having a wire-shaped or strip-shaped electrode (4), which has control elements (X, Y, U, V) and in addition fine control elements (XF, YF, UF, VF),
**characterised in that** the fine control elements (XF, YF, UF, VF) are designed to perform a fine servo movement directed at right angles to the geometry-producing feed,
**in that** at least one sensor device is provided to measure the distance between workpiece (2) and electrode (4), which interacts with the fine control elements (XF, YF, UF, VF) so that the distance can be kept in an optimal range by means of the fine control elements (XF, YF, UF, VF),
**and in that** the wire cutting device is designed so that the workpiece (2) serves as an absolute reference for the geometry of the fine cut.

22. A device according to Claim 21,
**characterised in that** a light sensor (14, 15) for measuring the luminous intensity of the discharge sparks in the working zone is disposed both above and below the workpiece.

23. A device according to Claim 21 or 22,
**characterised in that** the fine control elements (XF, YF, UF, VF) are piezo actuators.

24. A device according to Claim 21, 22 or 23,
**characterised in that** the fine control elements consist of force actuators (XK, YK, UK, VK), which deform at least one spring element in the linear range.

25. A device according to Claim 24,
**characterised in that** this (these) spring element(s) are structural parts (5, 6, 7) of the device or of a workpiece clamping system (10).

26. A device according to Claim 24 or 25,
**characterised in that** the force actuators (XK, YK, UK, VK) can be charged pneumatically or hydraulically with regulated pressure.

27. A device according to Claim 24 or 25,
**characterised in that** the force actuators (XK, YK, UK, VK) produce force electromagnetically.

28. A device according to Claim 24,
**characterised in that** the force actuators (XK, YK, UK, VK) produce force by heating and/or cooling and the resultant change in length of a temperature-sensitive expansion member.

29. A device according to one of Claims 24 to 28,
**characterised in that** the additional fine control elements (XF, YF, UF, VF) only act via the workpiece clamping system (10).

30. A device according to one of Claims 22 to 29,
**characterised in that** instead of the light sensors (14, 15) ultrasound sensors are provided.

31. A device according to one of Claims 21 to 30,
**characterised by** a visualising instrument on which the workpiece contour can be recorded, with the performed deflections of the fine servo movement also being recorded in a greatly enlarged form as a deviation from the workpiece contour.

## Revendications

1. Procédé d'usinage de finition par électro-érosion au moyen d'électrodes de formes filaires dans des machines à précision et stabilité limitées, où dans le cas où une pièce (2) a subi un usinage d'ébauche dans une ou plusieurs opérations d'ébauche, au moins un usinage de finition est effectué, procédé caractérisé en ce que, dans l'opération d'usinage de finition, on opère à l'aide d'au moins un dispositif à capteur et par des servo-mouvements (20) de façon à maintenir une largeur d'intervalle latéral optimale, la pièce (2) servant alors de référence absolue pour la géométrie de l'usinage de finition.

2. Procédé selon la revendication 1, caractérisé en ce que la largeur d'intervalle entre la pièce (2) et l'électrode-fil (4) est déterminée par une mesure d'au moins un paramètre électrique d'intervalle et en ce que, pour une vitesse constante d'usinage de finition, un servo-mouvement fin, superposé à l'avance productrice de géométrie, est effectué perpendiculairement à la direction d'avance de telle sorte que ce paramètre électrique d'intervalle, et par conséquent la largeur d'intervalle, soient maintenus constants.

3. Procédé selon les revendications 1 et 2, caractérisé en ce qu'il est prévu respectivement au-dessus et en-dessous de la pièce (2) un capteur de lumière (14, 15) dans la zone de travail, en ce que ces capteurs de lumière (14, 15) mesurent l'intensité lumineuse des étincelles de décharge et en ce que, par l'intermédiaire d'un autre servo-mouvement fin, l'électrode-fil (4) est basculée perpendiculairement à la direction d'avance de telle sorte que ladite intensité lumineuse soit identique au-dessus et en-dessous de la pièce (2) et qu'ainsi la position verticale de l'électrode-fil (4) corresponde à celle de la pièce (2).

4. Procédé selon les revendications 1 à 3, caractérisé en ce que, dans le cas où plusieurs opérations d'usinage de finition sont effectuées dans les parties de trajet faiblement incurvées et rectilignes prévues pour lesdites opérations d'usinage de finition, l'électrode-fil (4) est alternativement basculée d'une valeur déterminée, respectivement vers l'avant et ensuite vers l'arrière, dans la direction de coupe.

5. Procédé selon la revendication 1, caractérisé en ce que, immédiatement avant l'exécution de l'opération d'usinage de finition, la position et le dimensionnement effectifs de la pièce (2) sont déterminés par palpage, et en ce que le programme d'usinage est adapté à l'aide desdites données et au moyen du décalage à laisser et de la rotation de coordonnées ainsi que de la correction des décalages, de telle sorte qu'il concorde avec la pièce préusinée (2).

6. Procédé selon les revendications 1 à 5, caractérisé en ce que les servo-mouvements fins sont effectués à l'aide des axes de machine déjà existants (X, Y, U, V).

7. Procédé selon les revendications 1 à 6, caractérisé en ce que les servo-mouvements fins sont déterminés par l'intermédiaire de la correction de décalage déjà existante, cette correction de décalage étant adaptée constamment, à l'aide de la mesure de paramètres électriques d'intervalle et/ou à l'aide des capteurs de lumière (14, 15), de telle sorte que la largeur d'intervalle soit toujours maintenue constante.

8. Procédé selon les revendications 1 à 5, caractérisé en ce que le servo-mouvement fin est effectué à l'aide d'organes de réglage fin additionnels (XF, YF, UF, VF).

9. Procédé selon la revendication 8, caractérisé en ce que ces organes de réglage fin (XF, YF, UF, VF) sont des organes de piezo-actionnement.

10. Procédé selon la revendication 8, caractérisé en ce que des organes de réglage fin se composent d'organes d'actionnement dynamique (XK, YK, UK, VK) qui déforment un élément élastique dans un domaine linéaire.

11. Procédé selon la revendication 10, caractérisé en ce que ces éléments élastiques constituent des parties structurales (5, 6, 7) de la machine ou d'un système de serrage de pièce (10).

12. Procédé selon la revendication 10, caractérisé en ce que ces organes d'actionnement dynamiques (XK, YK, UK, VK) sont sollicités pneumatiquement ou hydrauliquement par une pression réglée.

13. Procédé selon la revendication 10, caractérisé en ce que ces organes d'actionnement dynamique (XK, YK, UK, VK) produisent une force électro-magnétiquement.

14. Procédé selon la revendication 10, caractérisé en ce que ces organes d'actionnement dynamique (XK, YK, UK, VK) produisent une force par échauffement et/ou par refroidissement et par variation résultante de longueur d'un corps dilatable sensible à la température.

15. Procédé selon la revendication 8, caractérisé en ce que ces organes de réglage fin additionnels (XF, YF, UF, VF) agissent seulement par l'intermédiaire du système de serrage de pièce.

16. Procédé selon les revendications 8 à 15, caractérisé en ce que ces organes de réglage fin (XF, YF, UF, VF) sont utilisés déjà avant l'opération d'usinage d'ébauche pour l'orientation de précision d'une pièce brute (1).

17. Procédé selon la revendication 3, caractérisé en ce qu'il est prévu à la place des capteurs de lumière (14, 15) des capteurs d'ultrasons dont les signaux sont analysés en synchronisme avec la cadence de générateur et, par l'intermédiaire des mesures des temps de progression des signaux ou de l'intensité acoustique, la répartition de décharge entre le côté supérieur et le côté inférieur de la pièce est déterminée.

18. Procédé selon les revendications 1 à 17, caractérisé en ce que la déviation du servo-mouvement fin est affichée pour l'opérateur sous une forme numérique et/ou graphique et en ce que, lors du dépassement d'une déviation maximale, une alarme est déclenchée et l'usinage est arrêté au moins pendant la durée du dépassement.

19. Procédé selon la revendication 18, caractérisé en ce que le contour de pièce est représenté sur un dispositif de visualisation et en ce que les déviations se manifestant dans un servo-mouvement de finition sont également représentées sous une forme fortement agrandie comme un écart du contour de pièce.

20. Procédé selon les revendications & à 19, caractérisé en ce que le servo-système de finition peut remplir simultanément une ou plusieurs des fonctions suivantes : exécution de la correction de broche ou de machine, alignement de précision de la pièce brute (1), alignement de précision du fil (4), compensation fine d'une déviation de fil captée par un capteur de position de fil, correction de décalage et correction de coupe de précision.

21. Dispositif d'usinage par électro-érosion avec électrode-fil pour usiner une pièce (2), comportant une électrode (4) en forme de fil ou de ruban, des organes de réglage (X, Y, U, V) et des organes de réglage fin additionnels (XF, YF, UF, VF), caractérisé en ce que :
- les organes de réglage fin (Xf, YF, UF, VF) sont agencés de façon à effectuer un servo-mouvement de finition orienté perpendiculairement à l'avance productrice de géométrie,
- il est prévu pour mesurer l'espacement entre la pièce (2) et l'électrode (4) au moins un dispositif de captage qui coopère avec les organes de réglage fin (XF, YF, UF, VF), de telle sorte que cet espacement puisse être maintenu dans une plage optimale à l'aide des organes de réglage fin (XF, YF, UF, VF), et en ce que le dispositif d'usinage par électro-érosion est agencé de telle sorte que la pièce (2) serve de référence absolue pour la géométrie de l'usinage de finition.

22. Dispositif selon la revendication 21, caractérisé en ce qu'il est prévu respectivement au-dessus et en-dessous de la pièce (2) un capteur de lumière (14, 15) pour mesurer l'intensité lumineuse des étincelles de décharge dans la zone de travail.

23. Dispositif selon la revendication 21 ou 22, caractérisé en ce que les organes de réglage fin (XF, YF, UF, VF) sont des organes de piezo-actionnement.

24. Dispositif selon la revendication 21, 22 ou 23, caractérisé en ce que les organes de réglage fin se composent d'organes dynamiques (XK, YK, UK, VK) qui déforment au moins un élément élastique dans un domaine linéaire.

25. Dispositif selon la revendication 24, caractérisé en ce que ce ou ces éléments élastiques sont des parties structurales (5, 6, 7) du dispositif ou bien d'un système de serrage de pièce (10).

26. Dispositif selon la revendication 224 ou 25, caractérisé en ce que les organes d'actionnement dynamique (XK, YK, UK, VK) peuvent être sollicités pneumatiquement ou hydrauliquement par une pression réglée.

27. Dispositif selon la revendication 24 ou 25, caractérisé en ce que les organes d'actionnement dynamique (XK, YK, UK, VK) produisent une force électro-magnétiquement.

28. Dispositif selon la revendication 24, caractérisé en ce que les organes d'actionnement dynamique (XK, YK, UK, VK) produisent une force par échauffement et/ou par refroidissement, et par variation résultante de longueur d'un corps dilatable sensible à la température.

29. Dispositif selon une des revendications 24 à 29, caractérisé en ce que les organes de réglage fin additionnels (XF, YF, UF, VF) agissent seulement par l'intermédiaire du système de serrage de pièce (10).

30. Dispositif selon la revendication 22 à 29, caractérisé en ce qu'il est prévu à la place des capteurs de lumière (14, 15) des capteurs d'ultrasons.

31. Dispositif selon une des revendications 21 à 30, caractérisé par un système de visualisation sur lequel le contour de pièce peut être affiché, les déviations produites dans le servo-mouvement de finition pouvant être également représentées sous une forme fortement agrandie comme un écart du contour de la pièce.
